# EUROPÄISCHE PATENTSCHRIFT

(11) **EP 3 486 073 B1**
(45) Veröffentlichungstag und Bekanntmachung des Hinweises auf die Patenterteilung: **23.08.2023**
(21) Anmeldenummer: 18205341.3
(22) Anmeldetag: 09.11.2018
(51) Int. Cl.: B29C 65/20, B29C 65/78, B29K 27/06, B29K 23/00

(54) **SPANNVORRICHTUNG**
CLAMPING DEVICE
DISPOSITIF DE SERRAGE

(30) Priorität: 16.11.2017 AT 509592017
(43) Veröffentlichungstag der Anmeldung: 22.05.2019
(73) Patentinhaber: IFN-Holding AG, 4050 Traun (AT)
(72) Erfinder: HOCHREITER, Herbert, 4048 Puchenau (AT)
(74) Vertreter: Burger, Hannes

(56) Entgegenhaltungen:
- EP-A1- 3 403 809
- WO-A1-2017/137466
- DE-A1- 2 201 656
- DE-A1- 19 753 846
- DE-A1-102016 102 240
- DE-U1-202015 000 908
- JP-A- 2001 150 552
- JP-A- 2003 089 155
- US-A- 6 119 752

## Beschreibung

Die Erfindung betrifft eine Spannvorrichtung umfassend ein erstes Spannelement und ein im Abstand dazu angeordnetes zweites Spannelement, zwischen denen ein Kunststoffprofil eingespannt werden kann, wobei zwischen dem ersten Spannelement und dem zweiten Spannelement ein in einer ersten Richtung verstellbares Anlageelement angeordnet ist oder wobei das zweite Spannelement das in einer ersten Richtung verstellbare Anlageelement umfasst, und das Anlageelement aus einem polymerem Werkstoff hergestellt ist, der eine Formbeständigkeit bis mindestens 300 °C aufweist.

Weiter betrifft die Erfindung eine Schweißvorrichtung zum Verschweißen von zwei Kunststoffprofilen miteinander umfassend ein Heizelement, insbesondere einen Schweißspiegel, und zumindest eine Spannvorrichtung zum Einspannen von zumindest einem der beiden Kunststoffprofile.

Zudem betrifft die Erfindung ein Verfahren zum Verschweißen von zwei Kunststoffprofilen miteinander, nach dem die beiden Kunststoffprofile in je einer Spanneinrichtung gehalten werden, zu verschweißende Endbereiche der Profile mit einem Heizelement erhitzt werden und danach die beiden Kunststoffprofile mit den erwärmten Endbereichen gegeneinandergepresst werden, wobei während des Erhitzens der zu verschweißenden Endbereiche Anlageelemente der Spannvorrichtungen gegen das Heizelement gepresst werden, wobei die Anlageelemente jeweils direkt an einem der Kunststoffprofile und direkt an dem Heizelement anliegend angeordnet werden, sodass eine Stirnfläche des Anlageelements mit einer Stirnfläche des zu verschweißenden Endbereichs der Kunststoffprofile fluchtend angeordnet wird, und wobei als Anlageelement eines mit einem polymerem Werkstoff eingesetzt wird, der eine Formbeständigkeit bis mindestens 300 °C aufweist.

Kunststoffprofile für Fenster und Türen werden heute üblicherweise in den Eckbereichen verschweißt. Dabei wird zur Erhitzung der zu verschweißenden Profilendbereiche ein Schweißspiegel eingesetzt. Nachdem die Profilendbereiche die für das Verbinden richtige Temperatur haben, wird der Schweißspiegel entfernt und die beiden Profile unter Druck miteinander verbunden. Es entsteht dabei ein Schweißwulst, der nachträglich wieder entfernt werden muss, da er die Oberflächenoptik der Fenster bzw. Türen stört. Zudem stört der Schweißwulst auch die Dichtheitsfunktion, da keine umlaufende Ebene gegeben ist.

Zur Vermeidung dieses Wulstes sind im Stand der Technik bereits unterschiedlichste Vorrichtungen und Verfahren beschrieben worden.

So beschreibt z.B. die DE 23 28 357 A1 eine Eckaußenform zur Verhinderung der Entstehung eines Schweißwulstes beim Stumpfschweißen von thermoplastischen Kunststoffprofilen, die Hinterschneidungen aufweisen, bestehend aus wenigstens zwei auseinanderfahrbaren, im zu sammengefahrenen Zustand das Profil passend umgreifenden Außenformteilen, wobei im Bereich der im Wesentlichen rechtwinklig zur Auseinanderfahrrichtung vertieften Hinterschneidungen jeweils ein die Hinterschneidung ausfüllendes, zu Beginn der Auseinanderfahrbewegung der Außenform einziehbares und am Ende der Zusammenfahrbewegung wieder ausfahrbares Formelement vorgesehen ist, und die Formelemente vor Beginn der Auseinanderfahrbewegung rechtwinklig zur Auseinanderfahrrichtung oder auf einem etwa rechtwinklig zur Auseinanderfahrrichtung verlaufenden Kreisbogen aus ihrer Hinterschneidung ausschwenkbar gelagert und mittels einer besonderen Stellvorrichtung aus ihrer Hinterschneidung ausschwenkbar und/oder in diese einschwenkbar sind.

Die DE 41 31 442 A1 beschreibt ein Verfahren zum Verschweißen von Kunststoffprofilen, bei dem beide miteinander zu verschweißenden Kunststoffprofile an ihren Stirnflächen bis auf Schweißtemperatur erwärmt und nach dem Erwärmen bis zur Anlage der Stirnflächen aneinander zusammengefügt werden, wobei beim Zusammenfügen Aufwulstungen des erwärmten Materials sowohl an den Außenflächen als auch an den gegenüberliegenden Innenflächen entstehen und wobei an den Außenflächen der Profile anliegende Einrichtungen zur Begrenzung der äußeren Schweißnahtwurzel vor dem Aushärten der äußeren Aufwulstung zusammengefahren werden. Das Zusammenfahren der an den Außenflächen anliegenden, die Schweißnahtwurzel begrenzenden Einrichtungen erfolgt mit einer zeitlichen Verzögerung gegenüber dem Vorfahren der Kunststoffprofile und nach der freien, unbehinderten Ausbildung der Schweißnaht, und zwar bis zu einem Restabstand, wobei die Einrichtungen das erwärmte, über die ursprüngliche Außenflächenkontur vorragende Material im plastischen Zustand im Wesentlichen außerhalb des verbleibenden Spaltbereichs bis zur ursprünglichen Außenkontur zurückdrücken, wobei das Zurückdrücken innerhalb einer Zeit erfolgt, in der die Viskosität des Kunststoffs im Schweißnahtzentrum immer noch niedriger ist als die Viskosität des zur Innenfläche weisenden Schweißnahtbereichs.

Aus der DE 10 2015 013 439 A1 ist ein Verfahren zum Verschweißen von zwei hohlen Profilstäben aus Kunststoff zur Bildung eines Fensterrahmens bekannt, bei dem die miteinander zu verbindenden Profilstäbe durch Einfügen eines Schweißspiegels zwischen deren Verbindungsflächen und Anpressen derselben an den Schweißspiegel unter Bildung eines Schweißwulstes auf eine vorgegebene Temperatur erhitzt und nach dem Entfernen des Schweißspiegels bei gleichzeitiger Vergrößerung des Schweißwulstes unter Druck zusammengefügt werden, wobei nach dem Entfernen des Schweißspiegels die an den Sichtflächen des späteren Fensterrahmens im Bereich der Verbindungsstellen der beiden Profilstäbe entstandenen äußeren Teile der Schweißwülste nach innen gepresst werden, dass danach der Schweißspiegel erneut zwischen die Verbindungsflächen der Profilstäbe bewegt wird und die Verbindungsflächen bei gleichzeitiger Verformung der nach innen gepressten Schweißwülste nacherhitzt werden und schließlich nach dem Entfernen des Schweißspiegels die Verbindungsflächen der beiden Profilstäbe zusammengefügt werden. Die Vorrichtung zur Durchführung des Verfahrens besteht aus einem Schweißkopf mit einem Schweißspiegel und zwei jeweils eine obere und eine untere Begrenzungsrampe aufweisenden und die beiden Profilstäbe aufnehmenden sowie deren Verbindungsflächen gegen einen Schweißspiegel anpressenden Spanneinheiten, wobei im Bereich der einander zugewandten Stirnflächen jeder Begrenzungsrampe mindestens ein Schieber geführt ist, dem ein Antrieb zum kurzzeitigen Anpressen gegen und Verformen des äußeren Teiles des im Bereich der Sichtfläche des späteren Fensterrahmens gebildeten Schweißwulstes zugeordnet ist.

Die WO 2016/177715 A1 beschreibt ein Verfahren zum Verbinden von Kunststoffprofilteilen, wobei wenigstens ein Profilteil und eine Heizfläche eines Heizelementes in einer Fügerichtung miteinander in Kontakt gebracht werden, um das wenigstens eine Profilteil in seinem Schweißbereich vor einem Zusammenfügen mit dem anderen Profilteil anzuschmelzen, wobei ein Begrenzungselement vorgesehen ist, mit dem ein Fließen und Verformen des Schmelzgutes kontrollierbar ist, wobei das Begrenzungselement zumindest ein Anlageelement und ein Formteil aufweist, welche sowohl zueinander als auch zu dem Profilteil bewegbar sind, wobei das Anlageelement zusammen mit dem Formteil bei einem Abschmelzen des zumindest einen Profilteils aus einer Ruheposition in Richtung zu einer Arbeitsposition relativ zu dem zumindest einen Profilteil und dem Heizelement bewegt wird, wobei zumindest das Formteil zumindest bei dem Abschmelzen in Kontakt mit der Heizfläche des Heizelementes und das Anlageelement in Kontakt zu einer Profiloberfläche gehalten wird, wobei das relativ bewegliche Anlageelement zusammen mit dem Formteil bei einem Umstellen von einem Schmelzen zum Stauchen so in Richtung zur Arbeitsposition bewegt wird, dass das Begrenzungselement eine freie Stirnkante des zumindest einen Profilteils überragt, so dass eine Halteebene gebildet ist.

Es wird damit der Austritt der Schmelze beim Schweißen kontrollierbarer und eine Formgebung des Schweißbereiches bei dem Verbinden selbst beeinflussbar, sodass ein Nachbearbeiten völlig oder zumindest teilweise entfallen kann.

Es sind aber auch schon konstruktiv einfachere Maßnahmen zur Reduktion des Nachbearbeitungsaufwandes von verschweißten Profilen vorgeschlagen worden.

So beschreibt die EP 0 264 052 A2 ein Verfahren zum Verschweißen von Kunststoffprofilen für Fenster- oder Türrahmen, wobei die Kunststoffprofile an ihren zu verschweißenden Enden vor dem Schweißvorgang profiliert werden, um mindestens teilweise je zwei parallele Bereiche zu bilden, von denen der erste Bereich gegenüber dem zweiten Bereich vorsteht, die an einem Schweißspiegel erwärmt und zum Verschweißen diese ersten Bereiche der beiden Kunststoffprofile gegeneinander geführt und gepresst werden, wobei auf der einen Seite dieser ersten Bereiche vom verdrängten Material ein Schweißwulst gebildet wird, und die zweiten Bereiche jedes Kunststoffprofils mindestens teilweise das beim Schweißvorgang auf diese Seite verdrängte Material aufnehmen. Die zweiten Bereiche erhalten ein im Wesentlichen kontinuierlich verlaufendes, und an die ersten Bereiche anschließendes Querschnittsprofil, und werden beim Erwärmungsvorgang über die ersten Bereiche mit erwärmt und beim Schweißvorgang mit verformt.

All diese Verfahren und Vorrichtungen arbeiten dann zufriedenstellend, wenn die Profile einfarbig sind. Probleme entstehen jedoch, wenn die zu verschweißenden Profile Dekormuster aufweisen.

Die DE 20 2015 000 908 U1 beschreibt eine Vorrichtung zum Verschweißen von zwei Kunststoffprofilen, bestehend aus zwei für den Schweißvorgang in Pressrichtung relativ gegeneinander bewegbaren Spanneinheiten, die jeweils zwischen einer unteren und eine oberen Begrenzungsplatte mit einer unter Gehrung verlaufenden Presskante ein Kunststoffprofil aufnehmen, sowie aus einem Schweißspiegel, wobei die Presskante an einer getrennten, in einer stufenartigen Ausnehmung jeder Begrenzungsplatte befindlichen Leiste ausgebildet ist, die Leiste in der Ausnehmung der Begrenzungsplatte senkrecht in Richtung der Presskante verschiebbar geführt ist, und in der Grundstellung der Leiste über die Vorderkante der Begrenzungsplatte hinausragt und bei der Einleitung des Schweißvorganges in Pressrichtung gegen eine Kraft verschiebbar ausgebildet ist.

Aus der JP 2001-150552 A ist eine Schweißvorrichtung zum Verbinden von Profilen bekannt, die das Auftreten von Rippen entlang der Endflächen der Profile während des Erwärmens so weit wie möglich verhindert. Die Vorrichtung ist mit einem Paar von Werkstückgreifmitteln ausgestattet, die das Werkstück greifen und in axialer Richtung in die Bereitschaftsposition und die Schmelzposition verbringen, während die schrägen Endflächen zueinander parallel bleiben.

Die JP 2003-089155 A beschreibt eine zur JP 2001-150552 A ähnliche Schweißvorrichtung

Aus der US 6,119,752 A ist ein Werkzeug mit gegenüberliegenden unteren und oberen Matrizen und gegenüberliegenden unteren und oberen Platten, die in beabstandeter Beziehung zu der unteren Matrize bzw. der oberen Matrize angeordnet sind, bekannt. Die Matrizen und Platten definieren gegenüberliegende Profiloberflächen, die einem äußeren Querschnittsprofil eines Kunststoffelements entsprechen, um zwischen diesen aufgenommen und gehalten zu werden. Bewegliche Befestigungsmittel verbinden die untere Platte mit der unteren Form und die obere Platte mit der oberen Form unabhängig voneinander, um die Platten relativ zu den Formen zwischen einer ersten distal beabstandeten Position und einer zweiten eng beabstandeten Position seitlich zu bewegen. Während des Schweißprozesses bewegen sich die Platten seitlich zwischen der ersten Position und der zweiten Position, um das Schweißmaterial, das von den distalen Enden der Elemente schmilzt, daran zu hindern, zur Außenseite der Verbindung zu fließen, die zwischen den Kunststoffelementen gebildet wird. Die Platten dichten das Außenprofil ab und zwingen das Schweißmaterial, innerhalb der Verbindung zu fließen. Eine Vorrichtung, die zwei der Werkzeuge verwendet, wird zusammen mit einem Verfahren zum Schweißen eines Paares von Kunststoffelementen offenbart, während der überschüssige Kunststoff an der Außenseite der Schweißverbindung reduziert wird.

Aus der DE 22 01 656 A1 ist ein Verfahren zum Verschweißen von Kunststoffprofilen bekannt, wobei diese in verschiebbare und einander annäherbare Einspannvorrichtungen einer Schweißvorrichtung eingespannt werden, wobei weiterhin zwischen die zu verschweißenden Stoßflächen der Profile ein Schweißspiegel zur Erwärmung der zu verschweißenden Bereiche eingebracht wird, und wobei die Enden der Kunststoffprofile mit den zu verschweißenden Stoßflächen während der gesamten, den Schweißvorgang ausmachenden Verfahrensschritte, also bei Heranführung an den Schweißspiegel, bei der anschließenden Annäherung nach Ausschwenken des Schweißspiegels und beim Zusammenpressen der Stoßflächen vollständig und ohne zeitweise Bildung eines Überstandes vom Formkopf der Einspannvorrichtung umschlossen werden. Weiter beschreibt die DE 22 01 656 A1 eine Vorrichtung zur Durchführung dieses Verfahrens.

Die DE 197 53 846 A1 beschreibt eine Schweißvorrichtung mit zwei Anschlagleisten, die an ihren sich gegenüberliegenden Stirnseiten passgenau zusammengeführt werden, zum Zusammenschweißen von zwei Halbzeugen aus extrudierten Hartkunststoffhohlprofilen, wie beispielsweise Tür- oder Fensterrahmenprofilen, wobei in mindestens einer der beiden Anschlagleisten eine in Längsrichtung der Anschlagleiste verschiebbare elastisch vorgespannte Profilschiene eingelassen ist, die über die Stirnseite vorsteht und die beim Zusammenführen der Anschlagleisten zurückgeschoben wird, und eine Einspannvorrichtung vorgesehen ist, durch die während des Zusammenschweißens mindestens ein Teil der beiden Halbzeuge gegen die Anschlagleiste und die Profilschiene gepresst wird.

Die DE 10 2016 102 240 A1 beschreibt eine Vorrichtung zum Verbinden wenigstens zweier Profilstücke aus Kunststoff, mit wenigstens einem in eine erste Fügerichtung verfahrbaren Spannelement zum Einspannen eines ersten Profilstücks, einem Heizelement, das wenigstens eine Heizfläche aufweist, die mit wenigstens einer Fügeseite wenigstens eines der Profilstücke in Kontakt bringbar ist, um wenigstens eines der Profilstücke an seiner Fügeseite vor einem Zusammenfügen mit dem anderen Profilstück anzuschmelzen, und wenigstens einem Inneneckwerkzeug zum Bearbeiten einer Innenecke wenigstens eines der Profilstücke, wobei das wenigstens eine Inneneckwerkzeug ein Druckstück aufweist, das zur Bearbeitung der Innenecke in einer ersten Verdrängungsrichtung bewegbar ist, die zu einer ersten Profilstablängsrichtung einen Winkel zwischen 0° und 45° aufweist.

Aus der WO 2017/137466 A1 ist ein Verfahren zum Verbinden von Profilteilen bekannt, wobei wenigstens ein Profilteil und eine Heizfläche eines Heizelementes in einer Fügerichtung miteinander in Kontakt gebracht werden, um das wenigstens eine Profilteil in seinem Schweißbereich vor einem Zusammenfügen mit dem anderen Profilteil anzuschmelzen, und wobei Begrenzungselemente eingesetzt werden, mit denen ein Fließen und Verformen des Schmelzgutes kontrollierbar ist, wobei die Begrenzungselemente zwischen 15° - 180° aufeinander zubewegt werden.

Aufgabe der vorliegenden Erfindung war es, eine verbesserte Möglichkeit zum Verbinden von Kunststoffprofilen miteinander zur Verfügung zu stellen.

Die Aufgabe der Erfindung wird mit der eingangs genannten Spannvorrichtung dadurch gelöst, dass das Anlageelement faserverstärkt ist.

Weiter wird die Aufgabe der Erfindung mit der eingangs genannten Schweißvorrichtung gelöst, bei der die Spannvorrichtung erfindungsgemäß ausgebildet ist.

Zudem wird die Aufgabe der Erfindung mit dem eingangs genannten Verfahren gelöst, nach dem vorgesehen ist, dass das Anlageelement faserverstärkt eingesetzt wird.

Durch das Anlageelement wird die Entstehung eines Schweißwulstes an der Außenoberfläche der Kunststoffprofile verhindert. Vielmehr wird der geschmolzene Kunststoff beim Schwei-ßen in das Innere des Kunststoffprofils verdrängt (üblicherweise sind Kunststoffprofile für Fenster oder Türen als Hohlkammerprofile ausgeführt), wo das überschüssige Material das Erscheinungsbild des Fensters oder der Tür nicht stört. Nachdem bereits beim Aufheizen der zu verschweißenden Endbereiche die Materialverdrängung in das Profilinnere stattfindet (die Kunststoffprofile werden mit Druck gegen das Heizelement gedrückt, sodass beim Erweichen des Kunststoffes es bereits zur Ausbildung des Schweißwulstes kommen würde), können die Kunststoffprofile unmittelbar anschließend miteinander verschweißt werden. Es ist also keine weitere Umformung der weichen Endbereiche erforderlich, wie dies teilweise im voranstehend beschriebenen Stand der Technik erfolgt. Dies wiederum wirkt sich positiv auf die Festigkeit der Schweißnaht aus, da jede Materialmanipulation nach dem Erhitzen zum Abkühlen der erhitzten Bereiche und damit zu einer Verminderung der Schweißnahtfestigkeit führt. Es konnten mit dem beschriebenen Verfahren Schweißnahtfestigkeiten in der Größenordnung von mindestens 90 % einer herkömmlichen Schweißnaht mit Wulstausbildung erreicht werden. Ein weiterer positiver Nebeneffekt der Spanneinrichtung und des damit durchgeführten Verfahrens ist, dass eine Nutbildung im Eckbereich, wie dies häufig bei Kunststofffenstern zu sehen ist, nicht mehr notwendig ist. Damit entfällt auch die nachträgliche farbliche Korrektur dieses Eckbereichs, wenn die Kunststoffprofile mit Dekormustern versehen sind. Nachdem diese nachträgliche Korrektur üblicherweise manuell erfolgt, beispielsweise mittels Airbrush, kann somit ein entsprechender positiver Nebeneffekt durch die Vermeidung dieser manuellen Arbeitsschritte realisiert werden.

Nach einer Ausführungsvariante der Spannvorrichtung ist bevorzugt vorgesehen, dass das verstellbare Anlageelement ein Federelement aufweist. Es wird damit möglich, dass gemäß einer Ausführungsvariante des Verfahrens die Anlageelemente jeweils mit dem Federelement gegen das Heizelement gepresst werden. Somit kann unabhängig vom Verfahrensverlauf besser gewährleistet werden, dass sich kein Spalt zwischen dem Anlageelement und dem Heizelement ausbildet. Zudem kann damit vermieden werden, dass während des Entfernens des Heizelementes weiches Kunststoffmaterial über die sichtbare Oberfläche des Kunststoffprofils vorquillt, da durch die Vorspannung des Anlageelementes mit dem Federelement das Anlageelement nach dem Entfernen des Heizelementes automatisch über die Stirnfläche des Kunststoffprofils vorragend verschoben wird.

Nach einer weiteren Ausführungsvariante der Spannvorrichtung kann vorgesehen sein, dass das Anlageelement zumindest ein federndes Element aufweist, sodass gemäß einer Ausführungsvariante des Verfahrens die Anlageelemente jeweils mit dem federnden Element gegen die jeweilige Oberfläche der Kunststoffprofile gepresst werden die Anlageelemente jeweils mit zumindest einem federnden Element gegen die Oberfläche jeweils eines der beiden Kunststoffprofile gepresst werden. Es kann damit einer Welligkeit der Oberfläche im Verbindungsbereich vorgebeugt werden, wodurch insbesondere wieder bei Kunststofffenstern oder - türen mit Dekormustern auf der Oberfläche eine unschöne Schattenbildung im Bereich der Schweißnaht vermieden werden kann.

Zur Verbesserung der Vermeidung der Spaltbildung zwischen Anlageelement und Heizelement kann gemäß einer weiteren Ausführungsvariante der Spannvorrichtung vorgesehen sein, dass das Anlageelement einen Vorsprung mit einer im Vergleich zur einer Gesamthöhe des Anlageelements geringeren Höhe aufweist. Durch die kleinere Anlagefläche werden Einflüsse von Unebenheiten auf eine unerwünschte Spaltbildung besser vermieden.

Nach einer anderen Ausführungsvariante der Spannvorrichtung kann vorgesehen sein, dass das Anlageelement zumindest teilweise aus einem Polymer besteht, das ausgewählt ist aus einer Gruppe bestehend aus PA, PTFE, PEEK, polymere Kunststoffe auf Basis von Polyphthalamid (PPA). Insbesondere diese Polymere haben sich nicht nur aufgrund der Temperaturbeständigkeit, sondern vor allem auch aufgrund der geringen Haftungsreibung zum Heizelement und zu den Kunststoffprofilen als vorteilhaft erwiesen. Darüber hinaus haben Anlageelemente aus zumindest einem dieser Werkstoff den Vorteil der geringen Wärmeleitfähigkeit, sodass sie den das Heizelement, insbesondere den Schweißspiegel, direkten berühren können, ohne es zu kühlen. Es ist damit möglich, trotz Kontakt des Anlageelementes mit dem Heizelement die Temperatur zu zumindest annähernd 100% in das Kunststoffprofil zu bringen.

Zum besseren Verständnis der Erfindung wird diese anhand der nachfolgenden Figuren näher erläutert.

Es zeigen jeweils in stark vereinfachter, schematischer Darstellung:
- Fig. 1: eine Schweißvorrichtung mit einer Spannvorrichtung für das Schweißen von Kunststoffprofilen,
- Fig. 2: die Schweißvorrichtung mit der Spannvorrichtung nach Fig. 1 in der Heizstellung;
- Fig. 3: die Schweißvorrichtung mit der Spannvorrichtung nach Fig. 1 in der Heizstellung mit bereits erweichten Endbereichen der Kunststoffprofile;
- Fig. 4: die Schweißvorrichtung mit der Spannvorrichtung nach Fig. 1 in der Fügestellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

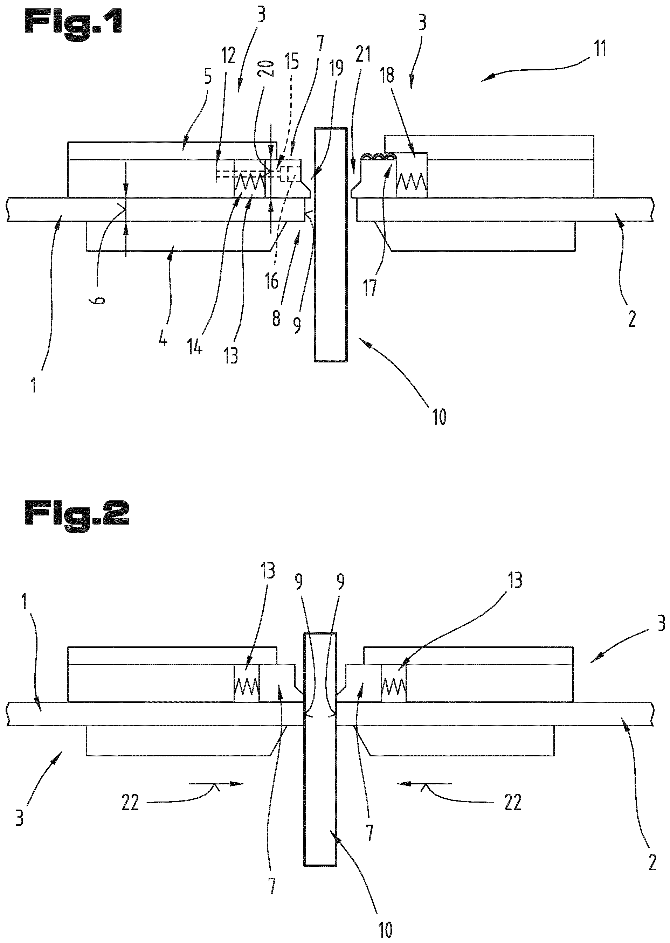

In den Fig. 1 bis 4 sind Verfahrensschritte zum Verschweißen von einem ersten Kunststoffprofil 1 mit einem zweiten Kunststoffprofil 2.

Die beiden Kunststoffprofile 1, 2 sind stark vereinfacht dargestellt. Üblicherweise handelt es sich bei diesen Kunststoffprofilen 1, 2 Hohlkammerprofile, wie sie in der Herstellung von Fenstern und Türen für deren Rahmen eingesetzt werden. Die Kunststoffprofile 1, 2 weisen daher mehrere Hohlkammern im Inneren auf, die mit Stegen voneinander getrennt sind. Da derartige Kunststoffprofile 1, 2 an sich aus dem Stand der Technik bekannt sind, sei bezüglich weiterer Einzelheiten dazu auf den einschlägigen Stand der Technik verwiesen.

Als Kunststoff für die beiden Kunststoffprofile 1, 2 kann beispielsweise PVC, PP, WPC (Wood Plastic Composite) verwendet werden.

Die beiden Kunststoffprofile 1, 2 können stumpf aneinander anliegend oder auf Gehrung geschnitten miteinander verschweißt sein.

Jedes der beiden Kunststoffprofile 1, 2 ist in einer Spannvorrichtung 3 eingespannt. Nachdem die beiden Spannvorrichtungen 3 vorzugsweise gleich ausgebildet sind, wird im Folgenden nur mehr eine der beiden Spannvorrichtungen 3 beschrieben. Die entsprechenden Ausführungen dazu können auf die zweite Spannvorrichtung 3 übertragen werden.

Die Spannvorrichtung 3 umfasst ein erstes (in der dargestellten Ausführungsvariante unteres) Spannelement 4 und ein zweites (in der dargestellten Ausführungsvariante oberes) Spannelement 5. Die beiden Spannelemente 4, 5 können sogenannte Spannbacken sein.

Das zweite Spannelement 5 ist in einem Abstand 6 zum ersten Spannelement 4 angeordnet, sodass das Kunststoffprofil 1 zwischen dem ersten und dem zweiten Spannelement 4, 5 eingespannt und damit während des gesamten Schweißvorgangs gehalten werden kann.

Die Spannvorrichtung 3 umfasst weiter ein Anlageelement 7.

Das Anlageelement 7 kann beispielsweise leistenförmig ausgebildet sein. Es ist in der Spannvorrichtung 3 derart angeordnet, dass es nach dem Einspannen des Kunststoffprofils 1 in die Spannvorrichtung 3 und zu Beginn des Verfahrens zum Verschweißen der beiden Kunststoffprofile 1, 2 miteinander einen Endbereich 8, d.h. eine Stirnfläche 9 des Endbereichs 8, in Richtung auf ein Heizelement 10 überragt, wie dies aus Fig. 1 ersichtlich ist.

Das Heizelement 10 ist Teil einer Schweißvorrichtung 11 zum Verschweißen der beiden Kunststoffprofile 1, 2. Insbesondere ist das Heizelement 10 als sogenannter Schweißspiegel ausgebildet. Zumindest eine der beschriebenen Spannvorrichtung 3, insbesondere beide Spannvorrichtungen 3, ist/sind ebenfalls Bestandteil der Schweißvorrichtung 11, wobei das Heizelement 10 zwischen zwei Spannvorrichtungen, insbesondere zwischen zwei der beschriebenen Spannvorrichtungen 3, am Beginn des Schweißverfahrens angeordnet ist, wie, dies aus Fig. 1 ersichtlich ist.

Das Anlageelement 7 ist in Richtung auf das Heizelement 10, d.h. in einer ersten Richtung verstellbar ausgebildet (= Verstellrichtung). Dazu kann das Anlageelement 7 zumindest teilweise aus einem Elastomer gebildet sein, sodass die Verstellbarkeit aus der elastomeren Verformbarkeit erhalten wird.

Bevorzugt weist die Spannvorrichtung 3 aber noch eine Abstützelement 12 auf. Dieses Abstützelement 12 ist zwischen dem ersten Spannelement 4 und dem zweiten Spannelement 5 angeordnet und liegt vorzugsweise direkt an dem Kunststoffprofil 1 an. Das Abstützelement 12 ist in Richtung auf Heizelement 10, also in ersten Richtung, kürzer ausgeführt, als das zweite Spannelement 4 in gleicher Richtung betrachtet. Es entsteht damit eine Ausnehmung 13, in der das Anlageelement 7 zumindest teilweise aufgenommen bzw. aufnehmbar ist.

Es kann aber auch vorgesehen sein, dass das Abstützelement 12 Teil des zweiten Spannelementes 4 ist, also einteilig mit diesem ausgebildet ist. In diesem Fall ist das zweite Spannelement 4 zur Bereitstellung der Ausnehmung 13 als Winkelprofil ausgebildet.

Zwischen dem Anlageelement 7 und einem Abstützelement 12 ist zumindest ein Federelement 14 angeordnet. Vorzugsweise sind über die Breite des Anlageelementes 7 (Richtung senkrecht auf die Papierebene in Fig. 1) verteilt mehrere Federelemente 14 angeordnet, insbesondere zwei.

Das zumindest eine Federelement 14 - insbesondere sind sämtliche Federelemente 14 gleich ausgebildet - können Schraubenfedern sein. Es ist aber auch möglich andere Federelemente 13, wie beispielsweise Blattfedern oder auch Pneumatik- oder Hydraulikzylinder, einzusetzen.

Das Federelement 14 oder die Federelemente 14 ermöglichen es, dass sie das Anlageelement 7 in Richtung über die Stirnfläche 9 des Kunststoffprofils 1 vorragend verbringt oder verbringen und dabei in den entlasteten oder einen zumindest teilweise entlasteten Zustand gelangen, der in Fig. 1 dargestellt ist.

Es sei in diesem Zusammenhang erwähnt, dass das erste Spannelement 3 sich ebenfalls nicht bis in den Endbereich des Kunststoffprofils 1 erstreckt, also gegenüber der Stirnfläche 9 des Kunststoffprofils 1 rückspringend angeordnet ist, wie dies in Fig. 1 dargestellt ist. Somit überragt das Anlageelement 7 auch das erste und das zweite Spannelement 4, 5 in der besagten Richtung.

Das zumindest eine Federelement 14 kann Teil des Anlageelementes 7 oder des Abstützelementes 12 sein.

Zur Begrenzung des Federweges in der Verstellrichtung des Anlageelementes 7 kann das Anlageelement 7 mit zumindest einem Verbindungselement, insbesondere zumindest einer Schraube 15, vorzugsweise mehreren Verbindungselementen, insbesondere mehrere Schrauben, mit dem Abstützelemente 12 verbunden sein, wie dies in Fig. 1 strichliert dargestellt ist. Das zumindest eine Verbindungselement kann dabei in einer Ausnehmung 16 des Anlageelementes 7 angeordnet sein, wobei sich diese Ausnehmung 16 in Richtung auf das Abstützelement 12 durchgehend durch das Anlageelement 7 erstreckt. Im vorderen Endbereich kann die Ausnehmung 16 eine stufenförmige Absetzung aufweisen. Es ist damit möglich, das zumindest eine Verbindungselement versenkt im Anlageelement 7 anzuordnen. Weiter ist im Falle einer Schraube 15 diese im Bereich des Anlageelementes 7 mit einer glatten Oberfläche ausgebildet, sodass sich das Anlegeelement 7 ungehindert in der Verstellrichtung bewegen kann.

Dadurch, dass das Anlageelement 7 in der Ausnehmung 13 gleitend gehalten ist, ist es also möglich, dass es in der Verstellrichtung verstellbar ist.

Gemäß einer Ausführungsvariante der Spannvorrichtung 3 kann vorgesehen sein, dass das zweite Spannelement 5 das in der Verstellrichtung verstellbare Anlageelement 7 umfasst, dass dieses also einen Teil des zweiten Spannelementes 5 bildet. Dies kann beispielsweise dadurch erreicht werden, dass das Anlageelement 7 zumindest teilweise aus einem verformbaren, also in der Verstellrichtung verstellbaren, Elastomer gebildet ist, das gegebenenfalls noch zumindest einen Hohlraum im inneren aufweist. Mit dem Hohlraum kann der Verstellweg vergrö-ßert werden bzw. die Verstellung vereinfacht werden.

In der bevorzugten Ausführungsvariante der Spannvorrichtung 3 ist der Verstellweg des Anlageelementes 7 nicht so groß, dass es zu Gänze aus der Ausnehmung 13 herausrutscht. Es weist also eine ständige Führung durch die Anlage an der Oberfläche der Ausnehmung 13 auf. Es ist aber nach einer anderen Ausführungsvariante möglich, dass diese das Anlageelement 7 nicht ständig durch die Oberfläche der Ausnehmung 13 geführt ist.

Gemäß einer weiteren Ausführungsvariante der Spannvorrichtung 3, die in Fig. 1 anhand der rechten Spannvorrichtung 3 für das Kunststoffprofil 2 dargestellt ist, kann vorgesehen sein, dass das Anlageelement 7 zumindest ein federndes Element 17 aufweist. Diese federnde Element 17 ist an der, der Anlagefläche zum Kunststoffprofil 2 gegenüberliegenden Oberfläche des Anlageelementes 7, also insbesondere an der oberen Oberfläche, angeordnet.

Im einfachsten Fall kann diese federnde Element 17 als Erhebung ausgebildet sein, die eine Hohlraum 18 aufweist. Durch den Hohlraum 18 ist die Erhebung komprimierbar.

Es aber auch möglich, dass ähnlich zur Ausführung des Federelementes 14 dieses federnde Element 17 auch als Feder ausgeführt ist und gegebenenfalls mit einer Leiste verbunden ist, die an der Oberfläche des Ausnehmung 13 anliegt, wenngleich die erstgenannte Ausführungsvariante konstruktiv deutlich einfacher ist.

Vorzugsweise sind mehrere derartige federnden Elemente 17 angeordnet.

In einer Abwandlung dazu kann das zumindest eine federnde Element 17 alternativ oder zusätzlich an der unteren, die Ausnehmung 13 teilweise begrenzenden Oberfläche des zweiten Spannelementes 5 angeordnet sein.

Mit dem federnden Element(en) 17 kann eine bessere Anlage des Anlageelementes 7 an der Oberfläche des Kunststoffprofils 1, 2 erreicht werden, wodurch eine Welligkeit des Kunststoffprofils 1, 2 aufgrund des Schweißens besser vermieden werden kann.

Es kann nach einer weiteren Ausführungsvariante der Spannvorrichtung 3 vorgesehen sein, dass das Anlageelement einen Vorsprung 19 mit einer im Vergleich zur einer Gesamthöhe 20 des Anlageelements 7 geringeren Höhe (in gleicher Richtung betrachtet) aufweist. Zur Ausbildung dieses Vorsprungs 19 kann das Anlageelement 7 mit einer Schräge 21 ausgeführt sein. Es ist aber auch ein stufenförmiger Übergang in den Vorsprung 19 möglich.

Der Vorsprung ist an der in Richtung auf das Heizelement 10 weisenden Oberfläche des Anlageelementes 7 angeordnet bzw. ausgebildet, wie dies aus den Fig. ersichtlich ist.

Das Anlageelement 7 besteht nach einer weiteren Ausführungsvariante der Spannvorrichtung 3 vorzugsweise aus den voranstehend genannten Gründen zumindest teilweise aus einem Polymer besteht, das ausgewählt ist aus einer Gruppe bestehend aus PA (Polyamid), PTFE (Polytetrafluorethylen), PEEK (Polyetheretherketon), polymere Kunststoffe auf Basis von Polyphthalamid (PPA), Duroplaste.

Für das Anlageelement 7 wird ein polymerer Werkstoff (Kunststoff) eingesetzt, der eine Formbeständigkeit bis mindestens 300 °C aufweist.

Das Anlageelement ist faserverstärkt, beispielsweise mit Mineralfasern, wie z.B. Basaltfasern, oder mit Glasfasern oder Kohlenstofffasern.

Der Faseranteil an dem Polymeren für das Anlageelement 7 kann zwischen 10 Gew.-% und 70 Gew.-%, insbesondere zwischen 30 Gew.-% und 65 Gew.-%, betragen.

Wie bereits ausgeführt, wird die Spannvorrichtung in einer Schweißvorrichtung 11 zur Durchführung des Verfahrens zum Verschweißen von zwei Kunststoffprofilen 1, 2 miteinander eingesetzt. Dazu werden die beiden Kunststoffprofile 1, 2 in jeweils einer Spanneinrichtung eingespannt, wobei zumindest eine Spanneinrichtung, vorzugsweise beide Spanneinrichtungen, durch die beschriebene Spannvorrichtung 3 gebildet ist/sind. Die beiden Kunststoffprofile 1, 2 werden des gesamten Schweißverfahrens in den Spannvorrichtungen 3 gehalten.

Zwischen den beiden Kunststoffprofilen 1, 2 wird das Heizelement 10 angeordnet. Danach werden die beiden Spannvorrichtungen 3 gemäß Pfeilen 22 gegen das Heizelement 3 angestellt. Durch dieses Anstellen gelangen die Anlageelemente 7 zur spaltlosen Anlage an das Heizelement 7, wobei sie während des Anlegens weiter in die Ausnehmungen 13 verschoben werden, bis auch die Stirnflächen 9 der Kunststoffprofile 1, 2 an Oberflächen des Heizelementes 10 anliegen, wie dies in Fig. 2 dargestellt ist.

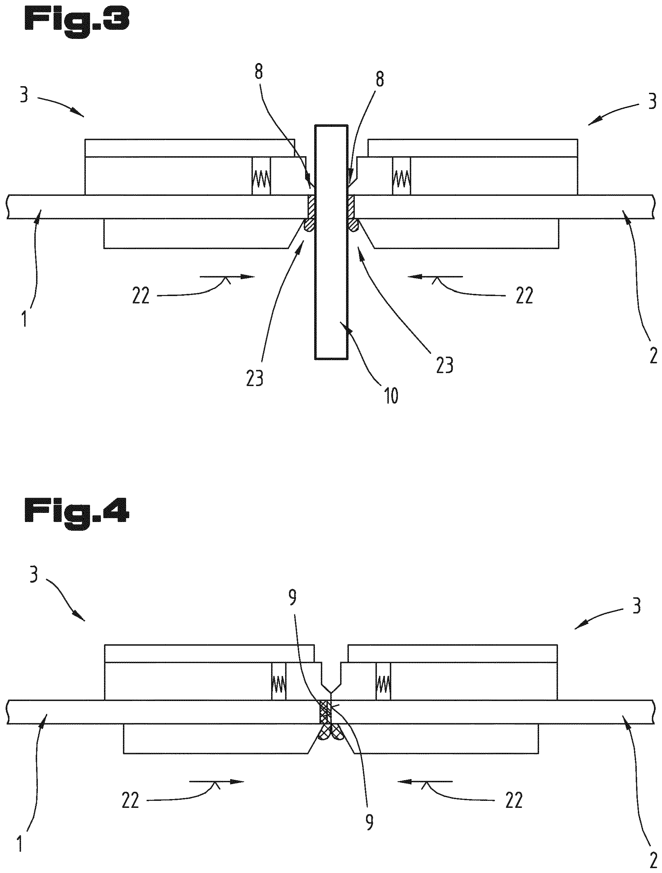

Durch die Hitze, die das Heizelement 10 abstrahlt, werden die Endbereiche 8 der Kunststoffprofile 1, 2 erweicht, wie dies in Fig. 3 durch die Schraffur angedeutet ist. Gleichzeitig werden die Kunststoffprofile 1, 2 weiter an das Heizelement 10 angepresst, sodass sie durch das Erreichen der Endbereiche 8 weiter in Richtung der Pfeile 22 verstellt werden.

Während des Erhitzens der Endbereiche 8 liegen die Anlageelemente 7 jeweils direkt an einem der Kunststoffprofile 1, 2 und direkt an dem Heizelement 10 an, sodass die Stirnfläche des Anlageelements 7 mit der Stirnfläche 9 des zu verschweißenden Endbereichs 8 der Kunststoffprofile 1, 2 fluchtend angeordnet sind.

Mit dem Erweichen des Kunststoffes und durch das Anpressen der Kunststoffprofile 1, 2 an das Heizelemente 10 bilden sich in den Endbereichen 8 Schweißwülste 23 aus. Nachdem die Anlageelemente 7 an der äußeren Oberfläche der Kunststoffprofile 1, 2 spaltfrei anliegen, können diese Schweißwülste 23 nur in die entgegengesetzte Richtung ausweisen. Sie werden also in die Hohlkammer(n) der Kunststoffprofile 1, 2 verdrängt.

Sobald die Endbereiche 8 der Kunststoffprofile 1, 2 ausreichend erweicht sind, werden sie mit den Spannvorrichtungen 3 entgegen der Richtung der Pfeile 22 von Heizelement 10 entfernt, letzteres aus dem Zwischenraum zwischen den Endbereichen 8 der Kunststoffprofile 1, 2 entfernt und danach die beiden Kunststoffprofile 1, 2 mit den Spannvorrichtungen 3 wieder entsprechend den Pfeilen 22 aufeinander zu bewegt bis sie aneinander an den Stirnflächen 9 anliegen, wie dies in Fig. 4 gezeigt ist. Dabei liegen auch die beiden Anlageelemente 7 spaltfrei aneinander an. Dieser Verfahrensschritt ist in Fig. 4 dargestellt. Diese Stellung wird solange gehalten, bis die beiden Kunststoffprofile 1, 2 miteinander verbunden (verschweißt sind).

Nachdem die Schweißnaht ausgebildet und kälter geworden ist, werden die beiden miteinander verbundenen Kunststoffprofile aus der Spannvorrichtung 3 entfernt.

Zur einfacheren Ableitung des den Schweißwulst 23 bildenden Kunststoffmaterials kann das erste Spannelement 4 mit einer Schräge versehen sein, wie dies in den Fig. 1 bis 4 dargestellt ist.

Wie voranstehend ausgeführt, kann nach einer bevorzugten Ausführungsvariante vorgesehen sein, dass die Anlageelemente 7 jeweils mit dem Federelement 14 gegen das Heizelement 10 gepresst werden.

Es kann weiter vorgesehen sein, dass die Anlageelemente 7 jeweils mit zumindest einem federnden Element 17 gegen jeweils eines der beiden Kunststoffprofile 1, 2 gepresst werden.

Der Ordnung halber sei abschließend darauf hingewiesen, dass zum besseren Verständnis des Aufbaus der Spannvorrichtung 3 bzw. der Schweißvorrichtung 11 diese nicht zwingenderweise maßstäblich dargestellt wurden.

### Bezugszeichenaufstellung

- 1: Kunststoffprofil
- 2: Kunststoffprofil
- 3: Spannvorrichtung
- 4: Spannelement
- 5: Spannelement
- 6: Abstand
- 7: Anlageelement
- 8: Endbereich
- 9: Stirnfläche
- 10: Heizelement
- 11: Schweißvorrichtung
- 12: Abstützelement
- 13: Ausnehmung
- 14: Federelement
- 15: Schraube
- 16: Ausnehmung
- 17: Element
- 18: Hohlraum
- 19: Vorsprung
- 20: Gesamthöhe
- 21: Schräge
- 22: Pfeil
- 23: Schweißwulst

## Patentansprüche

1. Spannvorrichtung (3) umfassend ein erstes Spannelement (4) und ein in einem Abstand (6) dazu angeordnetes zweites Spannelement (5), zwischen denen ein Kunststoffprofil (1 oder 2) eingespannt werden kann, wobei zwischen dem ersten Spannelement (4) und dem zweiten Spannelement (5) ein in einer ersten Richtung verstellbares Anlageelement (7) angeordnet ist oder wobei das zweite Spannelement (5) das in einer ersten Richtung verstellbare Anlageelement (7) umfasst, und das Anlageelement (7) aus einem polymerem Werkstoff hergestellt ist, der eine Formbeständigkeit bis mindestens 300 °C aufweist, **dadurch gekennzeichnet, dass** das Anlageelement (7) faserverstärkt ist.

2. Spannvorrichtung (3) nach Anspruch 1, **dadurch gekennzeichnet, dass** das verstellbare Anlageelement (7) ein Federelement (14) aufweist.

3. Spannvorrichtung (3) nach Anspruch 1 oder 2, **dadurch gekennzeichnet, dass** das Anlageelement (7) und/oder das zweite Spannelement (5) zumindest ein federndes Element (17) aufweist.

4. Spannvorrichtung (3) nach einem der Ansprüche 1 bis 3, **dadurch gekennzeichnet, dass** das Anlageelement (7) einen Vorsprung (19) mit einer im Vergleich zur einer Gesamthöhe (20) des Anlageelements (7) geringeren Höhe aufweist.

5. Spannvorrichtung (3) nach einem der Ansprüche 1 bis 3, **dadurch gekennzeichnet, dass** das Anlageelement (7) zumindest teilweise aus einem Polymer besteht, das ausgewählt ist aus einer Gruppe bestehend aus PA, PTFE, PEEK, polymere Kunststoffe auf Basis von PPA.

6. Schweißvorrichtung (11) zum Verschweißen von zwei Kunststoffprofilen (1, 2) miteinander umfassend ein Heizelement (10), insbesondere einen Schweißspiegel, und zumindest eine Spannvorrichtung (3) zum Einspannen von zumindest einem der beiden Kunststoffprofile (1, 2), **dadurch gekennzeichnet, dass** die Spannvorrichtung (3) entsprechend einem der vorhergehenden Ansprüche ausgebildet ist.

7. Verfahren zum Verschweißen von zwei Kunststoffprofilen (1, 2) miteinander, nach dem die beiden Kunststoffprofile (1, 2) in je einer Spanneinrichtung (3) gehalten werden, zu verschweißende Endbereiche (8) der beiden Kunststoffprofile (1, 2) mit einem Heizelement (10) erhitzt werden und danach die beiden Kunststoffprofile (1, 2) mit den erwärmten Endbereichen (8) gegeneinander gepresst werden, wobei während des Erhitzens der zu verschweißenden Endbereiche (8) Anlageelemente (7) der Spannvorrichtungen (3) gegen das Heizelement (10) gepresst werden, wobei die Anlageelemente (7) jeweils direkt an einem der Kunststoffprofile (1, 2) und direkt an dem Heizelement (10) anliegend angeordnet werden, sodass eine Stirnfläche des Anlageelements (7) mit einer Stirnfläche (9) des zu verschweißenden Endbereichs (8) der Kunststoffprofile (1, 2) fluchtend angeordnet wird, und wobei als Anlageelement (7) eines mit einem polymerem Werkstoff eingesetzt wird, der eine Formbeständigkeit bis mindestens 300 °C aufweist, **dadurch gekennzeichnet, dass** das Anlageelement (7) faserverstärkt eingesetzt wird.

8. Verfahren nach Anspruch 7, **dadurch gekennzeichnet, dass** die Anlageelemente (7) jeweils mit einem Federelement (14) gegen das Heizelement (10) gepresst werden.

9. Verfahren nach Anspruch 7 oder 8, **dadurch gekennzeichnet, dass** die Anlageelemente (7) jeweils mit zumindest einem federnden Element (17) gegen jeweils eines der beiden Kunststoffprofile (1, 2) gepresst werden.

## Claims

1. A clamping device (3) comprising a first clamping element (4) and a second clamping element (5) arranged at a distance (6) therefrom, between which a plastic profile (1 or 2) can be clamped, wherein a contact element (7) adjustable in a first direction is arranged between the first clamping element (4) and the second clamping element (5) or wherein the second clamping element (5) comprises the contact element (7) adjustable in a first direction, and the contact element (7) is made of a polymeric material which has a dimensional stability up to at least 300°C, **characterized in that** the contact element (7) is fiber-reinforced.

2. The clamping device (3) according to claim 1, **characterized in that** the adjustable contact element (7) comprises a spring element (14).

3. The clamping device (3) according to claim 1 or 2, **characterized in that** the contact element (7) and/or the second clamping element (5) comprises at least one resilient element (17).

4. The clamping device (3) according to one of claims 1 to 3, **characterized in that** the contact element (7) comprises a projection (19) with a lower height compared to an overall height (20) of the contact element (7).

5. The clamping device (3) according to one of claims 1 to 3, **characterized in that** the contact element (7) is at least partially made of a polymer selected from a group consisting of PA, PTFE, PEEK, polymeric plastics on the basis of PPA.

6. A welding device (11) for welding two plastic profiles (1, 2) to each other comprising a heating element (10), in particular a welding mirror, and at least one clamping device (3) for clamping at least one of the two plastic profiles (1, 2), **characterized in that** the clamping device (3) is designed according to one of the preceding claims.

7. A method for welding two plastic profiles (1, 2) to one another, according to which the two plastic profiles (1, 2) are each held in a clamping device (3), end regions (8) of the two plastic profiles (1, 2) are heated with a heating element (10) and thereafter the two plastic profiles (1, 2) with the heated end regions (8) are pressed against one another, wherein during the heating of the end regions (8) to be welded, contact elements (7) of the clamping devices (3) are pressed against the heating element (10), wherein the contact elements (7) are each arranged to abut directly against one of the plastic profiles (1, 2) and directly against the heating element (10), so that an end face of the contact element (7) is arranged to be aligned with an end face (9) of the end region (8) to be welded of the plastic profiles (1, 2), and wherein the contact element (7) used is one with a polymeric material which has a dimensional stability up to at least 300°C, **characterized in that** the contact element (7) is used being fiber-reinforced.

8. The method according to claim 7, **characterized in that** the contact elements (7) are each pressed against the heating element (10) by a spring element (14).

9. The method according to claim 7 or 8, **characterized in that** the contact elements (7) are each pressed against one of the two plastic profiles (1, 2) in each case by at least one resilient element (17).

## Revendications

1. Dispositif de serrage (3) comprenant un premier élément de serrage (4) et un deuxième élément de serrage (5), disposé à une distance (6) de celui-ci, entre lesquels peut être serré un profilé en matière plastique (1 ou 2), dans lequel, entre le premier élément de serrage (4) et le deuxième élément de serrage (5), est disposé un élément d'appui (7) mobile dans une première direction ou dans lequel le deuxième élément de serrage (5) comprend l'élément d'appui (7) mobile dans une première direction et l'élément d'appui (7) est constitué d'un matériau polymère qui présente une rigidité de forme jusqu'à au moins 300 °C, **caractérisé en ce que** l'élément d'appui (7) est renforcé par des fibres.

2. Dispositif de serrage (3) selon la revendication 1, **caractérisé en ce que** l'élément d'appui mobile (7) comprend un élément de ressort (14).

3. Dispositif de serrage (3) selon la revendication 1 ou 2, **caractérisé en ce que** l'élément d'appui (7) et/ou le deuxième élément de serrage (5) comprend au moins un élément élastique (17).

4. Dispositif de serrage (3) selon l'une des revendications 1 à 3, **caractérisé en ce que** l'élément d'appui (7) comprend une saillie (19) avec une hauteur faible par rapport à une hauteur totale (20) de l'élément d'appui (7).

5. Dispositif de serrage (3) selon l'une des revendications 1 à 3, **caractérisé en ce que** l'élément d'appui (7) est constitué au moins partiellement d'un polymère, qui est sélectionné dans un groupe constitué du PA, PTFE, PEEK, matières plastiques polymères à base de PPA.

6. Dispositif de soudage (11) pour le soudage de deux profilés en matière plastique (1, 2) entre eux, comprenant un élément chauffant (10), plus particulièrement un miroir de soudage, et au moins un dispositif de serrage (3) pour le serrage d'au moins un des deux profilés en matière plastique (1, 2), **caractérisé en ce que** le dispositif de serrage est conçu selon l'une des revendications précédentes.

7. Procédé de soudage de deux profilés en matière plastique (1, 2) entre eux, selon lequel les deux profilés en matière plastique (1, 2) sont maintenus chacun dans un dispositif de serrage (3), les zones d'extrémité (8) à souder des deux profilés en matière plastique (1, 2) sont chauffées avec un élément chauffant (10) puis les deux profilés en matière plastique (1, 2) avec les zones d'extrémité (8) chauffées sont comprimés l'une contre l'autre, dans lequel, pendant le chauffage des zones d'extrémité (8) à souder, les éléments d'appui (7) du dispositif de serrage (3) sont comprimés contre l'élément chauffant (10), dans lequel les éléments d'appui (7) sont disposés chacun de manière appuyée directement contre un des profilés en matière plastique (1, 2) et directement contre l'élément chauffant (10), de sorte qu'une face frontale de l'élément d'appui (7) est disposée de manière alignée avec une face frontale (9) de la zone d'extrémité (8) à souder des profilés en matière plastique (1, 2) et dans lequel l'élément d'appui (7) utilisé est constitué d'un matériau polymère qui présente une rigidité de forme jusqu'à au moins 300 °C, **caractérisé en ce que** l'élément d'appui (7) est renforcé par des fibres.

8. Procédé selon la revendication 7, **caractérisé en ce que** les éléments d'appui (7) sont comprimés chacun avec un élément de ressort (14) contre l'élément chauffant (10).

9. Procédé selon la revendication 7 ou 8, **caractérisé en ce que** les éléments d'appui (7) sont comprimés chacun avec un au moins un élément élastique (17) contre respectivement un des deux profilés en matière plastique (1, 2).
